# EUROPEAN PATENT APPLICATION

(11) **EP 2 395 446 A1**
(43) Date of publication of application: **14.12.2011**
(21) Application number: 10305634.7
(22) Date of filing: 14.06.2010
(51) Int. Cl.: G06F 21/00

(54) **Method for pairing a first device with a second device**

(71) Applicant: Gemalto SA, 92190 Meudon (FR)
(72) Inventor: Ganem, Hervé, 92197 Meudon Cedex (FR)

(57) **Abstract**

The present invention relates to a method for pairing a first device with a second device, said first and second devices being linked to a remote server, said first device comprising an accelerometer and said second device being linked to a third device. The method comprises the following steps:
- the first device and the second device capture a common movement respectively to the first and to the third devices;
- the first device and the second device send data resulting from the common movement to the remote server so as to create a unique identifier of the movement;
- the remote server compares the identifier of the movement of the first device and the identifier of the movement of the second device, and if the identifiers match, the remote server pairs operations performed from the first and the second devices.

## Description

The invention relates to the field of security devices. The invention especially deals with a method for pairing two devices.

Secure devices are known to provide enhanced security. In traditional implementations, this enhanced security is counterbalanced by extra constraints imposed upon the user such as the need to use a particular terminal, or install specific software on his computer limiting service access to a particular machine...

The growing level of threats on PC platforms is leading to a renewed interest for methods involving the simultaneous use of two distinct devices connected to different networks as a way to reinforce the security of applications.

Out of band authentication using a handset as the authenticating device is one application relying on this principle: a login request is performed on the PC, while the capture of the authentication credentials, such as a pin code is performed on an associated handset. Payment using the handset also relies on this principle: a user purchases something using his PC and approves the payment using his handset.

This type of use cases usually involve the creation of a pairing between the PC and the handset. This pairing is necessary in order to relate actions performed on the PC and actions performed on the handset.

Several methods exist to create such pairing. One of them consists in predefining the pairing when the user enrol for the service at registration time, by associating a user identifier that will be captured on the PC (when accessing the service, or to perform a transaction), with a handset endpoint address which will enable handset addressing.

However, privacy protection becoming a key issue in our society, there is a need for preserving the anonymity of a user when performing an operation or a transaction from an anonymous device such as a PC, while achieving strong user authentication.

It is an object of the invention to provide a method which creates a unique pairing between two devices, wherein at least one of the two devices is a security device.

Thereto, the present invention provides a method for pairing a first device with a second device, said first and second devices being linked to a remote server, said first device comprising an accelerometer and said second device being linked to a third device, wherein it comprises the following steps:
- the first device and the second device capture a movement common respectively to the first and to the third devices,
- the first device and the second device send data resulting from the common movement to the remote server so as to create a unique identifier of the movement;
- the remote server compares the identifier of the movement of the first device and the identifier of the movement of the second device, and if the identifiers match, the remote server pairs operations performed from the first and the second devices.

Thanks to this method, a unique pairing is created between an "anonymous" computer and a secure device such as a handset using an accelerometer embedded inside the handset or inside the UICC.

A device such as a PC is linked with a handset to a same transaction with a simple hand gesture.

Thanks to the invention a user authentication can be made safely. An "anonymous" device connects to a service or web site and another device such as a handset - with an UICC- is being used to authenticate the user.

In a payment operation on the web, a user can request a payment from a PC and approve it from his handset. Thanks to this method, the user can perform a payment with his handset on the internet without having to enter a credit card number.

A user can also advantageously digitally sign a document displayed on the PC using a UICC as the signature device.

This method is simple and can also be used to implement e-transaction and e-transactions.

According to other aspects of the invention,
- the movement of the first and the third device may be captured independently and differently;
- the first device may be a handset and the second device may be a PC;
- an accelerometer may be used inside a UICC device adapted to be inserted in said handset;
- the third device may be a mouse;
- the third device may be a touchpad;
- for capturing the common movement, the handset may be placed on the top of the mouse and both the handset and the mouse are moved together;
- the mouse may be captured within a browser window displayed in the PC, and the movement of the mouse may be captured with a client side software such as a java script embedded in a web page displayed by the browser;
- for capturing the common movement, a user may put a finger of one of hand on the touchpad while holding the handset in the same hand for performing a movement.

The present invention provides the use of this method for processing a transaction.

The present invention also provides the use of this method for signing a document.

Thanks to this method, there is no need for the user to remember any password or identifier. It advantageously makes a user access to digital transaction easier and safer.

This invention provides an extra security with a simplified architecture.

The invention is now described, by way of example, with reference to the accompanying drawings.

The various aspects, features and advantages of the invention will become more fully apparent to those having ordinary skill in the art upon careful consideration of the following detailed description thereof with the accompanying drawings described below:

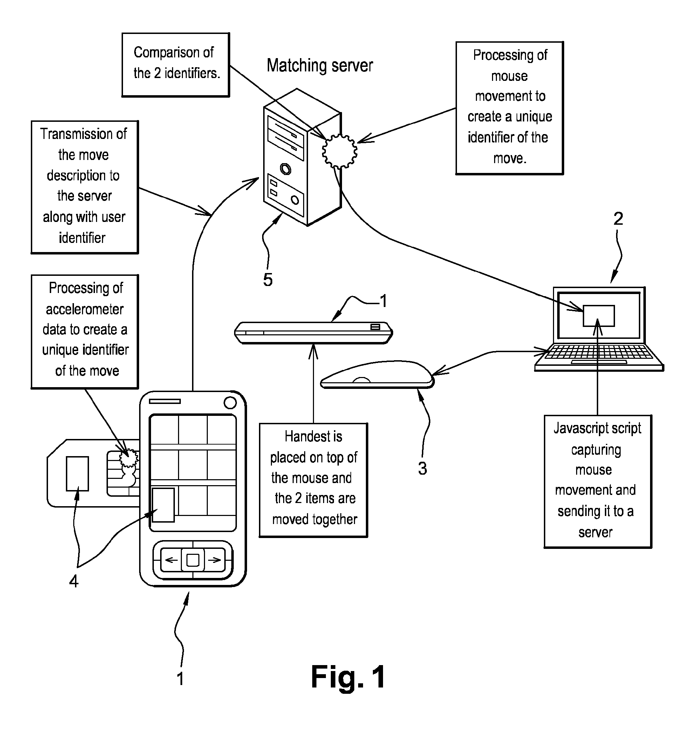

**FIG.1** schematically shows an architecture of an embodiment of the present invention.

The present invention may be understood according to the detailed description provided herein.

Shown in Fig.1 is a method according to an embodiment of the present invention. The method comprises different steps for pairing a first device, such as a handset 1 with a second device such as the PC 2. The handset 1 and the PC 2 are linked to a remote server 3. The PC is linked to a third device, such as a mouse 3.

An accelerometer 4 is embedded inside the handset 1 or inside a UICC of the handset 1.

A user is accessing a service, or performs a transaction using the anonymous PC 2. For enhanced security, the UICC of the handset is for example used to implement security related aspects of the login/transaction operation. A key requirement is to avoid the need of installing software on this PC. The user is interacting with a remote service using a web browser supporting javascript.

The user does not have to enter any password nor identifier in order to be recognized for the transaction or the service accessed from the PC 2.

Instead In order to perform the pairing operation, the user starts an application on the handset 1 or on the UICC that will enable the collection of data incoming from the accelerometer 4. The user places his handset 1 on top of the mouse 3 and performs a random gesture on a table with the mouse 3. The handset 1 and the mouse 3 move together while the mouse 3 is within the browser window in the PC. The gesture or movement is like a signature. This unique movement performed simultaneously by the mouse 3 and the handset 1 is used to derive a unique identifier linking the two devices.

For doing so, the movement of the mouse 3 is captured with a javascript embedded in the web page displayed by the browser. Once the mouse movement is detected, tracked, and analysed on the PC 2 via the javascript application, a unique identifier characterizing the mouse motion is created. The movement of the mouse 3 captured by the javascript is transmitted to a remote server by means of the javascript XMLHTTPRequest command. This command which is enabling most Ajax application makes possible for a javascript running locally inside a browser to communicate with a remote server.

The handset motion is detected, tracked and analysed thanks to the accelerometer embedded in the UICC so as to create the same identifier number.

The two movements are captured independently and differently. The mouse tracks data on x,y position of the movement, and the handset tracks data on the acceleration of the movement.

Both numbers are transmitted independently using IP protocols to a remote server 5 which is a central server. When the two identifier numbers match, the remote server 5 pairs the two devices 1,3, and then takes appropriate action according to the application. The remote server sends for example an authentication challenge to the UICC if the application involves a user authentication.

It will be understood that the data collected from the handset or UICC accelerometer can be also transmitted to the remote server after a possible local processing on the UICC or in the handset in order to minimise the size of the data transmitted.

It will also be understood that the unique identifiers can be created by the remote server. In this case, it is the remote server which processes the mouse movement and the accelerometer data.

Along with the accelerometer 4, the handset 1 or the UICC also transmit data elements enabling the identification of the user.

On the server, if both the data transmitted by the PC 2 and data transmitted by the handset 1 match, it thus associates the handset 1 with the PC 2. These two devices are then paired and an action performed on the PC can be related to another action on the handset.

For example, in a payment transaction, the move on the PC 2 is captured via a javascript prior to be sent to a remote server, along with the payment amount. The move on the handset is captured via the accelerometer prior to be sent to the same remote server along with the user name and credit card number after the user has optionally entered a pin code on his handset to enable this transmission. The matching server then processes the movement description received from multiple users and is able to match the movement transmitted from the PC and the movement transmitted by the handset, thus being able to associate a user name, and credit card number to the payment amount receive by the PC and thus complete the transaction.

In another embodiment, instead of a mouse, the third device 3 is a touchpad. The user performs the move on a touchpad while holding the handset 1 in his hand. The description of the move of the mouse is captured by javascript scripting, while the move of the handset is captured via the accelerometer inside the UICC or the handset. The PC and the handset transmit independently their information to a common remote server, which is then able to pair the operations performed from the two devices.

This method can be used in multiple applications such as payment on internet with mobile with no need to enter credit card number wherein a payment operation requested from the PC and approved from the handset. This method can also be used for a strong user authentication to access services requiring security( banking, saving, tax).

This method can also be used for digitally sign a document display on the PC using a handset. For doing so, the user displays on the browser of the PC 2, a document to sign electronically.

The handset of the user is equipped with a PKI enabled UICC, which is used to produce the electronic signature.

The user starts an accelerometer collection application on the handset 1, places the mouse 3 in an "active area" inside the browser, places the handset 1 on top of the mouse 3, and mimics his signature using the mouse 3. The move of the mouse 3 is captured by a javascript and sent to the remote server, along with a hash code of the document to be signed. This hash code identifies the document to be signed.

The move of the handset is then captured with the accelerometer and sent to the matching server. The remote server associates the two requests thanks to the move description. It then passes the hand to a PKI server which sends to the handset 1 a signature request including the specified hash. Using the private PKI key provisioned inside the UICC, the handset is then able to return the signed version of the hash.

Thanks to this method, the user does not need to produce any identifier on the PC in order to sign the document, thus making the application immune to any spyware present on the PC.

This method allows advantageously to secure access to corporate web site or resources, or to secure access to cloud computing applications. It also allows creating security in B2B transactions.

## Claims

1. Method for pairing a first device with a second device, said first and second devices being linked to a remote server, said first device comprising an accelerometer and said second device being linked to a third device, wherein it comprises the following steps:
a. the first device and the second device capture a movement common respectively to the first and to the third devices,
b. the first device and the second device send data resulting from the common movement to the remote server so as to create a unique identifier of the movement;
c. the remote server compares the identifier of the movement of the first device and the identifier of the movement of the second device, and if the identifiers match, the remote server pairs operations performed from the first and the second devices.

2. Method according to claim 1, wherein, the movement of the first and the third device are captured independently and differently.

3. Method according to claim 1 or 2, wherein it uses a handset as being the first device and a PC as being second device.

4. Method according to claim 3, wherein it uses an accelerometer inside a UICC device adapted to be inserted in said handset.

5. Method according to claim 1 to 4, wherein it uses a mouse as being the third device.

6. Method according to claim 1 to 4, wherein it uses a touchpad as being the third device.

7. Method according to claim 5, wherein for capturing the common movement, the handset is placed on the top of the mouse and both the handset and the mouse are moved together.

8. Method according to claim 5 or 7, wherein the mouse is captured within a browser window displayed in the PC, and the movement of the mouse is captured with a client side software such as a java script embedded in a web page displayed by the browser.

9. Method according to claim 6, wherein for capturing the common movement, a user puts a finger of one of hand on the touchpad while holding the handset in the same hand for performing a movement.

10. Use of the method according to one of the previous claims for processing a transaction.

11. Use of the method according to one of the previous claims for signing a document.
